# EUROPEAN PATENT APPLICATION

(11) **EP 1 591 936 A1**
(43) Date of publication of application: **02.11.2005**
(21) Application number: 04023105.2
(22) Date of filing: 28.09.2004
(51) Int. Cl.: G06F 17/60

(54) **Point management method, point management system, terminal and point management program**

(30) Priority: 26.04.2004 JP 2004130395; 06.08.2004 JP 2004231581
(71) Applicant: Dwango Co., Ltd., Tokyo 103-0007 (JP)
(72) Inventor: Kanehara, Yuka, c/o Dwango Co., Ltd., Chuo-ku, Tokyo 103-0007 (JP); Mizuno, Takuhiro, c/o Dwango Co., Ltd., Chuo-ku, Tokyo 103-0007 (JP); Kubo, Kazuto, c/o Dwango Co., Ltd., Chuo-ku, Tokyo 103-0007 (JP)
(74) Representative: Betten & Resch

(57) **Abstract**

A point management method and a point management system are provided which can transfer points based on a plea. A server, which operates a point system, includes a unit for producing and transmitting a point transfer request mail, a unit for subtracting points to be transferred from the balance of points of a user who offers a transfer of points and producing and retaining point transfer information, a unit for producing and transmitting an allowance mail containing point number information and a unit for adding the number of points agreed to be transferred to the balance of points of the user who pleads for points upon receipt of an access from the user based on the allowance mail. A user, who is short of points, can positively plead with a user, who is likely to have residual points, for some points, and the user who is willing to transfer points can transfer points through a simple operation, thereby making it possible to enhance the conveniences to the users.

## Description

### BACKGROUND OF THE INVENTION

### Field of the Invention

The present invention relates to a point management method, a point management system, a terminal and a point management program, and more particularly to a point management method, a point management system, a terminal and a point management program which can transfer a point or points based on a point transfer request (a plea for a point or points).

### Description of the Related Art

Conventionally, in a downloading site for incoming call identification melodies for mobile phones, a certain number of points are accumulated when a user pays periodically (e.g. monthly) a certain amount of money for a monthly rate for a service he or she receives via his or her mobile phone, whereby the user is allowed to download an incoming call identification melody by using the points so accumulated. Consequently, in the event that he or she has used up the accumulated points, the user cannot download a new incoming call identification melody until a required number of points are accumulated. Thus, a technique has been proposed in which points are transferred among users. For example, Japanese Unexamined Patent Publication No. 2002-109424 (i.e. JP-A-2002-109424) discloses a technique in which accounts are settled by transferring points among the members.

When the conventional point transfer method as described in the Japanese unexamined patent publication is adopted in the aforesaid incoming call identification melodies downloading site, a problem occurs. In particular, while users having residual points have to find parties to whom the points are to be transferred, time and labor have to be expended to find the user who wants points. Furthermore, a troublesome operation has to be carried out to transfer the points. In addition, there another problem is caused since users who are short of points tend to feel it difficult for them to transfer points from the users having the residual points as the former has to ask the latter to perform the troublesome operation.

### SUMMARY OF THE INVENTION

The invention was made to solve at least these problems, and with a view to attaining this objective, according to a first aspect of the invention, there is provided

A point management method including: producing and transmitting a point transfer request mail containing information on the number of points requested to be transferred upon receipt of a request from a terminal of a user; substracting a number of points agreed to be transferred are from the balance of points of a user who offers a transfer of the agreed number of points when there is an access from a terminal of the user based on the transfer request mail and preparing a point transfer mail to be transmitted to the terminal of the user who has requested a transfer of points; and adding the agreed number of points to the balance of points of the user who has requested a transfer of points when there is an access from the terminal of the user based on the point transfer mail.

A point management method as set forth in Claim 1, wherein the subtracting further comprises changing the number of points contained in the transfer request mail.

A point management method as set forth in Claim 1, wherein the adding further comprises confirming that the agreed number of points have not yet been transferred and changing the status of the points such that the points have been transferred.

A point management system comprising:
a transfer request mail producer that produces and transmits a point transfer request mail which contains information on the number of points requested to be transferred upon receipt of a request from a terminal of a user; a transfer processor that produces and stores transfer information by subtracting the number of points agreed to be transferred from the balance of points of a user who offers a transfer of the agreed number of points when there is an access from a terminal of the user based on the transfer request mail; a point transfer mail producer that produces and transmits a point transfer mail which contains information on the number of points to be transferred; and a point transfer adder that adds the number of points agreed to be transferred to the balance of points of the user who has requested a transfer of points when there is an access from the terminal of the user based on the point transfer mail.

A point management system as set forth in Claim 4, wherein the transfer processor further comprising a changing unit for changing the number of points contained in the transfer request mail.

A point management system as set forth in Claim 4, further comprising a downloader that downloads an application program in the terminal.

A computer readable mediuam storing a computer program for executing a computer the program comprising: a transfer request mail producer that produces and transmits a point transfer request mail which contains information on the number of points requested to be transferred upon receipt of a request from a terminal of a user; a transfer processor that substracts the number of points agreed to be transferred from the balance of points of a user who offers a transfer of the agreed number of points when there is an access from a terminal of the user based on the transfer request mail, and produces and stores transfer information; a point transfer mail producer that produces and transmits a point transfer mail which contains information on the number of points to be transferred; and a point transfer adder that adds the number of points agreed to be transferred to the balance of points of the user who has requested a transfer of points when there is an access from the terminal of the user based on the point transfer mail.

A terminal comprising: a request mail producer that produces a point transfer request mail in cooperation with a server; an allowance transmission assistant that assists in producing an allowance point transmission mail in cooperation with the server based on a received point transfer request mail; and a receipt assistant that assists in a point receiving process based on a received allowance transmission mail.

Thus, according to the first to eighth aspects of the invention, a technique can be provided in which residual points of a user can easily be transferred. In addition, since a user who is short of points can positively plead with a user who is likely to have residual points for some points and the user who is ready to transfer points can transfer the points by a simple operation, an advantage in is provided that the convenience to the users can be enhanced. Additionally, there is another advantage that a user who has residual points can reduce time and effort that are required to find a user who is short of points.

### BRIEF DESCRIPTIO OF THE DRAWINGS

Fig. 1 is a schematic drawing schematically illustrating and explaining the configuration of a system according to an embodiment of the invention,
Fig. 2 is a block diagram illustrating an example of the internal configuration of a server according to an embodiment of the invention,
Fig. 3 is a block diagram illustrating the internal configuration of a mobile phone according to an embodiment of the invention,
Fig. 4 is an explanatory drawing illustrating the configuration of a point purchase table which manages the transfer of points,
Fig. 5 is a flowchart illustrating the contents of a point transfer request mail producing step according to an embodiment of the invention,
Fig. 6 is a flowchart illustrating the contents of an allowance transmitting step according to an embodiment of the invention,
Fig. 7 is a flowchart illustrating the contents of a point receiving step according to an embodiment of the invention,
Figs. 8A, 8B and 8C are explanatory drawings illustrating an example of a screen displayed in the allowance transmitting step, and
Figs. 9A, 9B and 9C explanatory drawings illustrating an example of a screen displayed in the point receiving step.

### DESCRIPTION OF THE PREFERRED EMBODIMENT

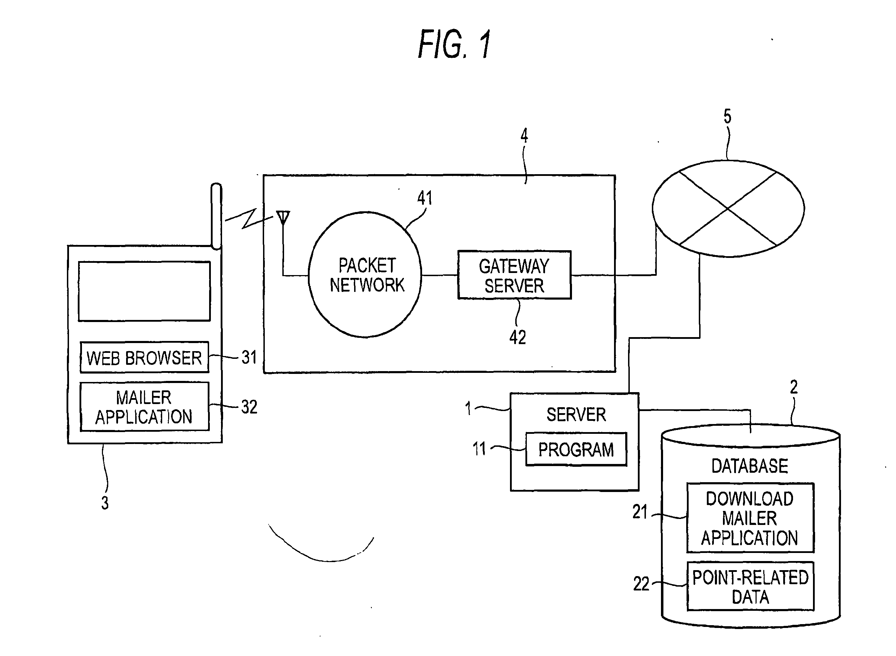

Hereinafter, a best mode for carrying out the invention will be described in detail by reference to the accompanying drawings. In this mode, an example is disclosed in which a mobile phone is used as a terminal. However, the invention can be applied to any terminal which can be connected to an internet, such as for example a personal digital assistant (PDA) . Firstly, the configuration of the entire system will be described. Fig. 1 is a schematic drawing schematically illustrating and explaining the configuration of a system according to an embodiment of the invention.

As shown in Fig. 1, for example, this system is such that a mobile terminal (a mobile phone 3 as a non-limiting example thereof) and a server 1 can communicate with each other across a mobile phone network 4 and an internet 5. The mobile phone network 4 includes a packet network 41 which is connected to a base station, not shown, and which governs a packet processing and a gateway server 42 which is connected to the internet 5 and which governs communication with various types of terminals which are connected to the internet 5. The gateway server is configured to enable the transmission and connection to the internet 5 from the mobile terminal side.

The mobile phone 3 stores a Web browser 31 which enables Web browsing via HTTP (Hyper Text Transfer Protocol), a mailer application program (hereinafter, referred to as an application) according to the invention and the like. The mobile phone 3 can enjoy a Web browsing service by accessing respective sites of the internet 5 via the Web browser 31.

The server 1 includes or is connected to a database 2, communicates with other terminals via the internet 5 using a program 11 and performs a process, which will be described later on, in response to an access fromamobile terminal. The database 2 is a large-scale storage unit connected to the server 1, stores a downloading mailer application 21 and point-related data 22 such as purchase table data for managing the balance of points of each user and the transfer of points. The database provides required data to the server 1 based on the control by the server 1.

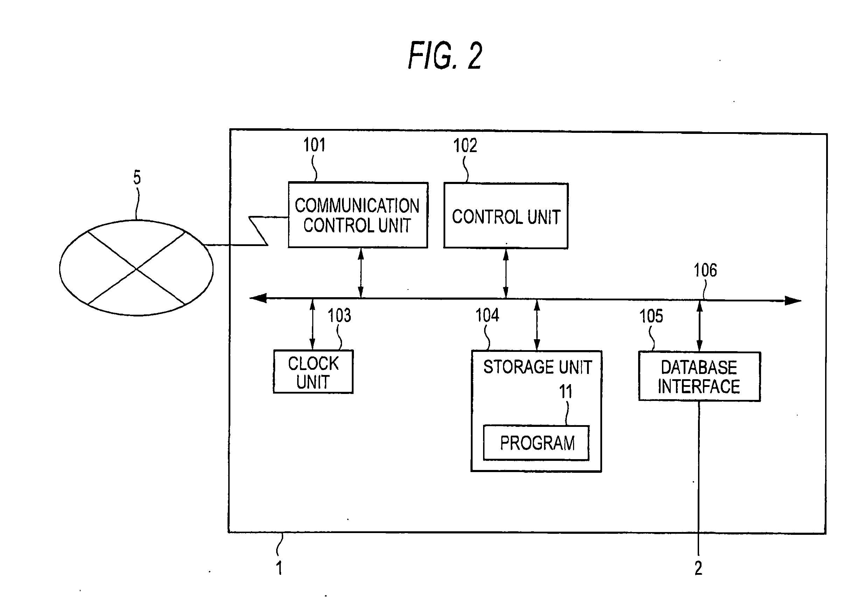

Fig. 2 is a block diagram illustrating an example of an internal configuration of the server 1 according to an embodiment of the invention. As shown in Fig. 2, for example, the server 1 is connected to the internet 5 and includes such units as a communication control unit 101 which is connected to the internet 5 so as to govern a two-way communication with other apparatuses such as a mobile terminal and a PC via the internet 5, a control unit 102 which includes a CPU, ROM, RAM and the like and which governs the control of the entirety of the server 1, and a clock unit 103 for measuring time. The program 11 for providing a Web browser display to other terminals and performing processes of the server itself, a storage unit 104 for storing various types of data or parameters, and a database interface 105 which is connected to the database 2 so as to transmit and receive data to and from the database are provided, whereby the respective units are connected to a bus line 106 in the interior thereof so as to enable the transmission of data, address signals and control signals.

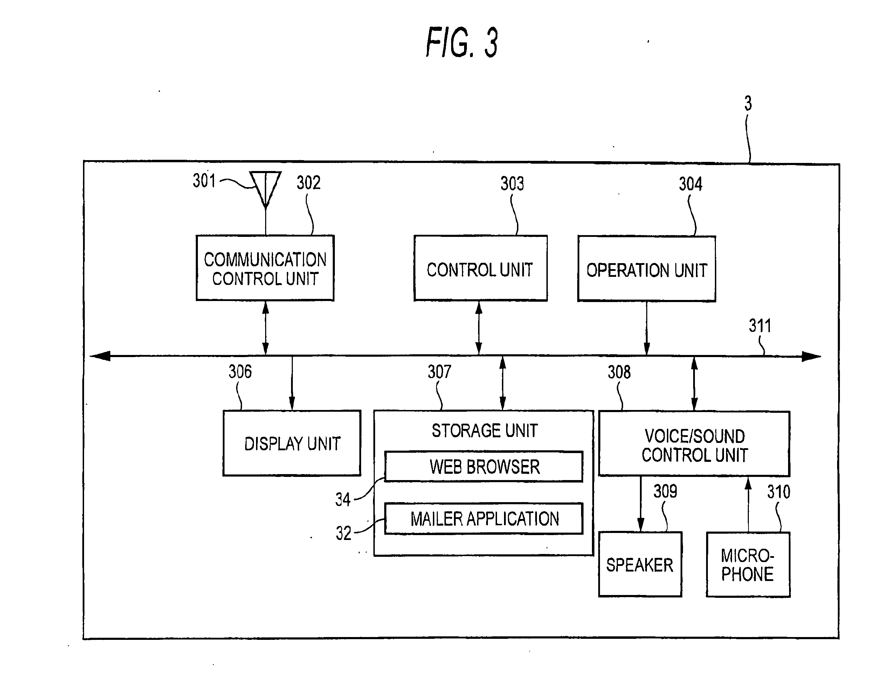

Fig. 3 is a block diagram illustrating an example of the internal configuration of the mobile phone 3 according to an embodiment of the invention. As shown in Fig. 3, for example, the mobile phone 3 includes units or components such as a communication control unit 302 to which an antenna 301 is connected, a control unit 303, an operation unit 304, a display unit 306, a storage unit 307, and a voice/sound control unit 308. The respective units are connected to a bus line 311 so as to enable the transmission of data, address signals and control signals there between. The communication control unit 302 performs radio communication with the mobile phone network 4 via the antenna 301. This communication control unit 302 can perform a voice transmission between other terminals with a telephone function and the mobile phone 3, and data transmission between the server 1 and the mobile phone 3.

The control unit 303 includes a CPU, ROM, RAM and the like and controls the entire mobile phone 3 according to the ROM and various types of programs of the storage unit 307. The control unit 303 controls the Web browsing via the Web browser 31 (for example, JAVA (trademark) application) which is provided therein as standard equipment and performs a process, which will be described later on, via the mailer application 32, according to the invention, which is downloaded to be installed therein. The mailer application 32 is an application program including electronic mail transmitting and receiving functions.

The operation unit 304 an input device which can include dial keys for inputting telephone numbers and characters, selection keys used to invoke a main menu and to enable the vertical and horizontal movements of a cursor relative to selectable icons on the screen so as to select one of a plurality selectable items, a confirmation key for confirming the item selected with the dial keys and selection keys and keys used to enter symbols while using the mail function or entering characters. The input device is not limited to keys but can be embodied in any type of input mechanism.

The display unit 306 includes, for example, a liquid crystal (or other) display and displays thereon, for example, the Web browser or operation screens used when the telephone and mail functions are used. As has been described above, the storage unit 307 stores therein the Web browser 31 and the mailer application 32. A speaker 309 and a microphone 310 are connected to the voice/sound control unit 308, so that the speaker 309 is controlled with respect to the sound output of a calling tone, an incoming call identification melody and an incoming call identification song or "Chaku Uta (trademark)" and the voice output when talking and the microphone 310 is controlled with respect to the voice input when talking.

Hereinafter, the function and operation of a point management system according to the present invention will be described. Note that while the server 1 may be, for example, a server for providing a registered paying user with a service in which an incoming call identification melody is downloaded, the point management method according to the invention can also be applied to any point utilization system. In addition, users J, K are assumed to have already completed a user registration in this site by a known method, and the application program (the mailer application 32) is assumed to have been downloaded in their mobile phones. Further, the term mail as used herein refers to electronic mail or e-mail.

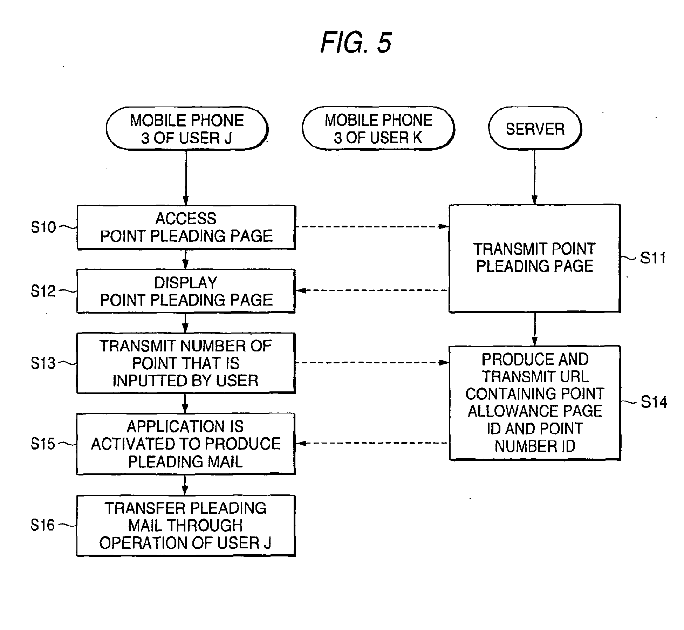

Fig. 5 is a flowchart illustrating the contents of a point transfer request mail producing step in the point management system according to the invention. Vertical lines denote the passage of time, whereas horizontal dotted lines denote the movement of data (the same applies to all descriptions hereinafter). In a point transfer request mail producing step, which is a step or process for preparing and transmitting a point transfer request mail which contains information on the number of points requested to be transferred, an example will be described in which the user J pleads with the user K for some points to be transmitted to user J and the user K transmits points to the user J as an allowance.

In S10, the user J accesses a point pleading or request page with his or her mobile phone 3 using the browser. Note that in the event that the server 1 is an official server approved by a common carrier of the mobile phone network 4, since the server 1 can obtain from the mobile phone network 4 user ID information (hereinafter, referred to as UID) which is single intrinsic or unique identification information that is given to the user of a mobile phone 3 when attempting to have access e.g. the server from the mobile phone 3, the server 1 obtains this UID so as to identify a mobile phone 3 used to access the page and uses it as a user ID. In addition, in this invention, a known authentication method can be adopted which uses an ID and a password.

In S11, the server 1 transmits the point pleading page. In S12, the browser of the mobile phone 3 of the user J displays the point pleading page. The user J enters the number of points for which he or she wants to plead on this page. In S13, the mobile phone 3 of the user J transmits information on the number of points entered by the user J to the server 1.

In S14, the server 1 produces and transmits to the mobile phone 3 of the user J data of a URL containing a point allowance page ID and a point number ID. In S15, the application 32 is activated when the data is received from the server 1, and a pleading mail is produced. In this pleading mail, the URL is described after a specific delimiter (no further description is allowed), and when this mail is received using the same application, the application is designed to identify the URL. Note that since there exists a situation where the mail is received by a mobile phone in which the application is not installed, the URL is described before a delimiter in the main text. In addition, the data of the URL may be embedded in a header portion of the mail. In S16, the mobile phone 3 of the user J transfers the pleading mail so produced to the user K with whom the user J wants to plead for the points based on the operation of the user J.

Note that in a case where a pleading mail is produced on a mobile phone in which the application is not installed, the following procedure is performed. In S14, the server 1 produces a pleading mail in which the URL containing the point allowance ID and the point number ID is described and transmits the pleading mail to the mobile phone 3 of the user J. In the mobile phone 3 of the user J, the mailer receives the pleading mail transmitted from the server 1, and the pleading mail so received is then transferred to the mobile phone 3 of the user K with whom the user J wants to plead for the points based on the operation of the user J. This process is a normal mail transfer process.

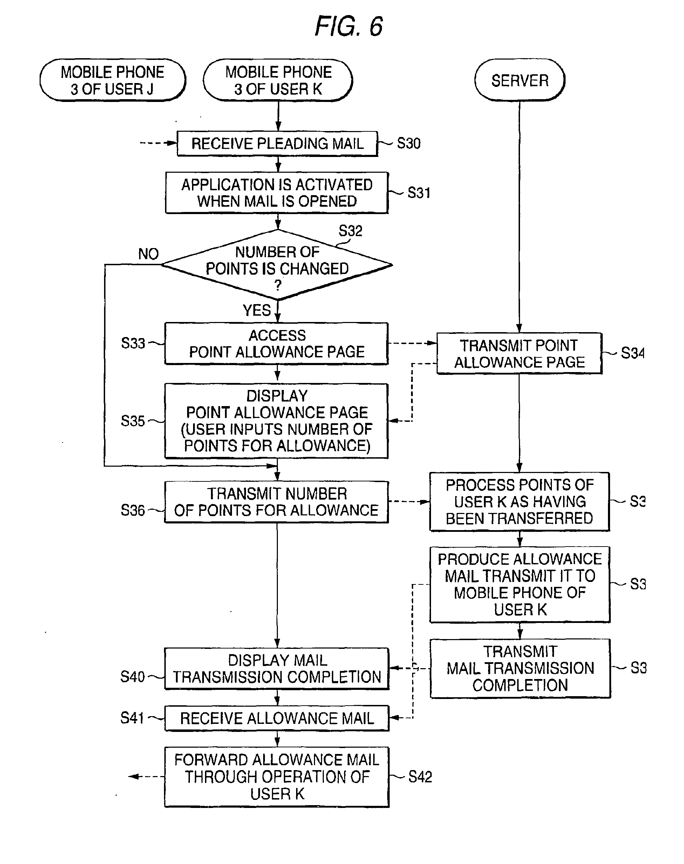

Next, an allowance transmission step will be described. Fig. 6 is a flowchart illustrating the contents of an allowance transmission step in the point management of the invention. In an allowance transmission step which is a step in which based on a received transfer request mail (the pleading mail in the embodiment of the invention), the number of points to be transferred is subtracted from the balance of points of the user who offers a transfer of points, and a point transfer mail (an allowance mail in the embodiment of the invention) is prepared to be transmitted. First, in step S30, the mobile phone 3 of the user K receives the pleading mail using the mailer application. In S31, when the user K operates the mobile phone 3 to open the mail received using the mailer application, the mobile phone 3 of the user K activates the application to display the pleading mail.

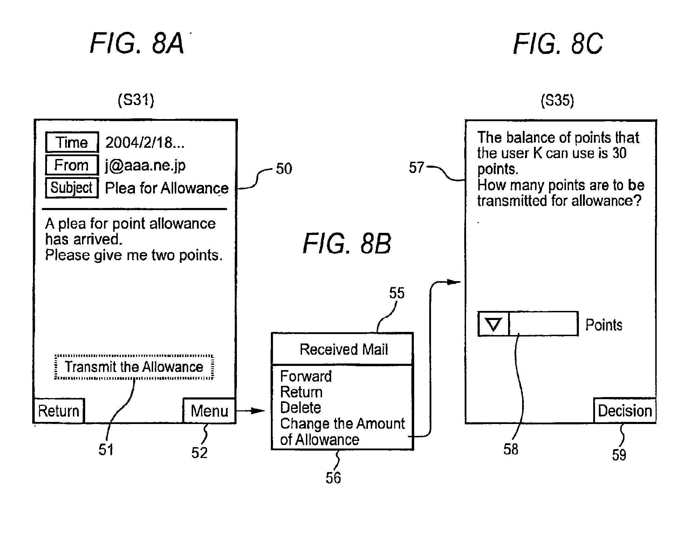

Fig. 8A shows an example of a screen 50 of the pleading mail that is displayed by the application in S31. A transmitter (the address thereof (from)) and the number of points pleaded for are displayed, and an area 51 indicating "transmit the allowance" is displayed at a lower part of the screen by the application. In addition, a "menu" area 52 is displayed at a bottom right-hand corner of the screen. Note that when the display is implemented by the application, the URL in the main text is not displayed, and instead, the area 51 is displayed. If the user K transmits an allowance without changing the pleaded number of points, the user K selects the "transmit the allowance", whereas in the event that the user K changes the number of points, the user K selects the menu and then selects a "change the amount of allowance" from a menu displayed in Fig. 8B.

In S32, the mobile phone 3 of the user K determines whether or not the number of points is changed via the selecting operation by the user K, and if the result of the determination indicates that no change is needed (the "transmit the allowance" is selected), the flow proceeds to S36. However, when the result indicates that a change is needed (the "menu" is selected and then the "change the amount of allowance" is selected), the flow proceeds to S33. In S33, the mobile phone 3 of the user K accesses the point allowance page based on the point allowance page ID information contained in the URL described in the pleading mail.

In S34, the server 1 transmits the point allowance page. In S35, the mobile phone 3 of the user K displays the point allowance page. Fig. 8C shows a screen example 57 of the point allowance page. A point number entering area 58 is displayed in a middle part of the screen. The user K enters the number of points to be transferred on this screen.

In S36, the mobile phone 3 of the user K transmits the point number data to the server 1. Also, in the event that the flow proceeds from S32, the mobile phone 3 of the user K accesses the point allowance page based on the point allowance page ID information contained in the URL which is described in the pleading mail. In S37, a transfer process of points of the user K is implemented in the server 1 . Namely, the server 1 subtracts the number of points that is transferred from the balance of points of the user K that is stored in the point-related data 22 of the database 2 corresponding to the user ID of the user K and adds a new record to a transfer table.

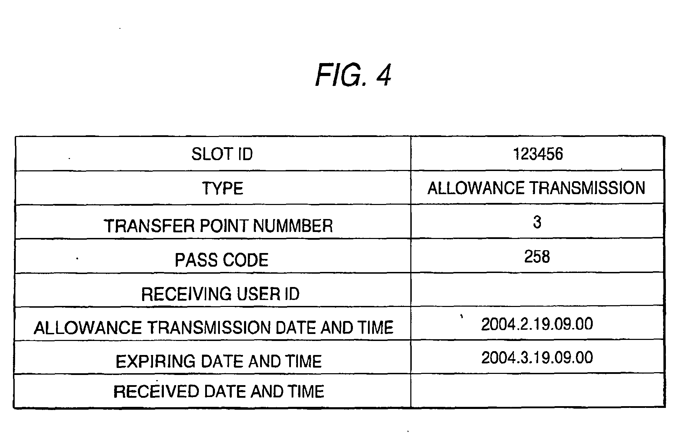

Fig. 4 is an explanatory drawing showing the configuration of a record on a point transfer table which manages the transfer of points. A slot ID is an identification number of this record. The number of points to be transferred as an allowance is entered in an item of the record which relates to the number of points, and a bus code is produced to be set uniquely and randomly. A receiving user UID column and a receiving date and time column are left blank (not yet received) when producing the record.

In S38, the server 1 produces an allowance mail and transmits the mail to the mobile phone 3 of the user K. The allowance mail contains a URL which contains, in turn, a character-string parameter in which the point transfer information is encrypted. This URL is the address of a point receiving page, and the point transfer information contains data such as the user ID of a user (J) who receives the allowance, carrier (common carrier) ID, server ID of the transfer table in addition to the slot ID, point number and pass code thereof.

In S39, the server 1 transmits a mail transmission completion page. InS40, the mail transmission completion page is displayed on the mobile phone 3 of the user K. In S41, the mobile phone 3 of the user K receives the allowance mail that is transmitted in S38. In S42, the allowance mail received on the mobile phone 3 of the user K is then transferred to the mobile phone 3 of the user J based on the operation by the user K. This is the end of the allowance transmission step.

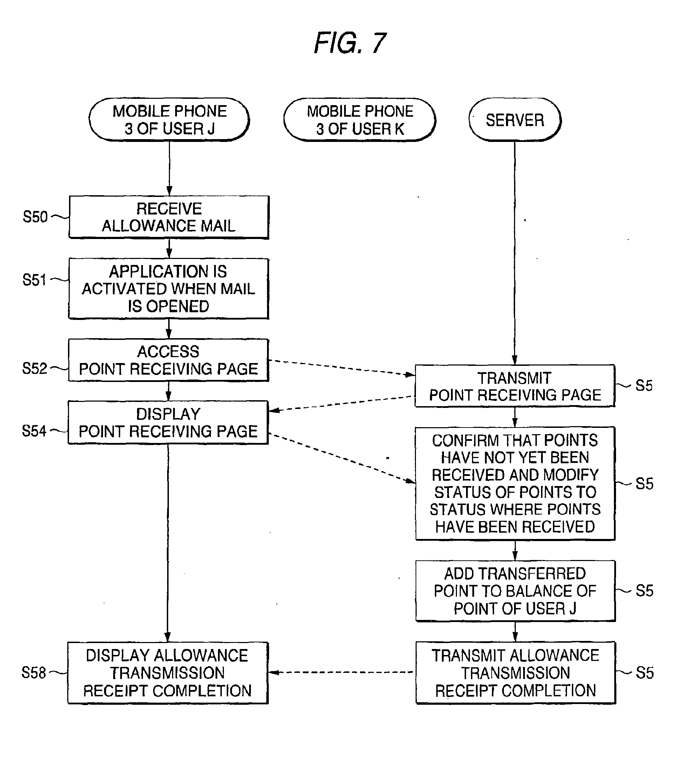

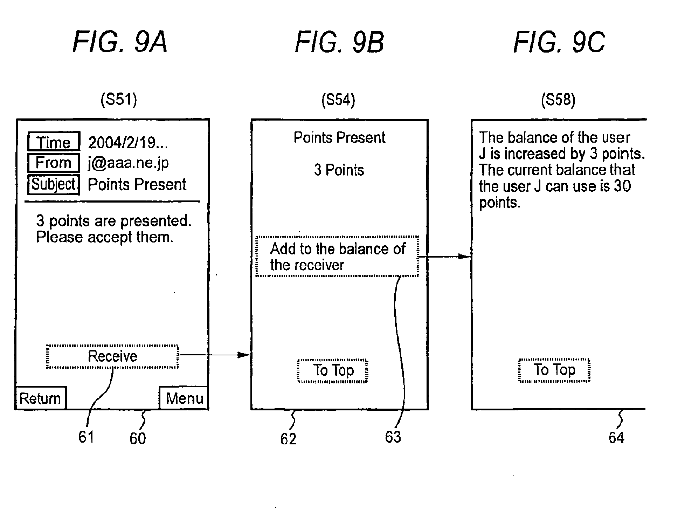

Next, a point receiving step will be described. Fig. 7 is a flowchart illustrating the contents of the point receiving step in the point management system of the invention. In the point receiving step which is a step in which the number of points to be transferred is added to the balance of points of the user based on the point transfer mail so received, the mobile phone 3 of the user J receives the allowance mail in S50. In S51, based on an operation for opening the allowance mail, the mobile phone 3 of the user J activates the application to display the allowance mail. Fig. 9A shows an example of an allowance mail screen which is displayed by the application in S51. A transmitter (a mail address of the user who offers the allowance) and the number of points transmitted as the allowance are displayed, and an area designated as "receive" is displayed at a lower part of the screen. Here, the user J selects the "receive".

In S52, the mobile phone 3 of the user J accesses the point receiving page based on the URL which contains the character-string parameter in which the point transfer information is encrypted. When this access is attempted, the server 1, as has been described before, obtains the UID from the mobile phone network 4 so as to identify the mobile phone 3. In S53, the point receiving page is transmitted from the server 1. In S54, the mobile phone 3 of the user J displays the point receiving page. Fig. 9B shows an example of the screen of the point receiving page displayed in S54. Here, the user J selects an "add to the balance of the receiver." Then, the mobile phone 3 of the user J transmits to the server 1 the character-string parameter in which the point transfer information described in the allowance mail is encrypted.

In S55, after confirming that the points that have been transmitted as the allowance have not yet been received, the server 1 changes the status of the points to show that the points have been received. Namely, firstly, the point transfer information received from the mobile phone is decrypted. As has been described before, since the point transfer information contains the slot ID, point number and pass code of the transfer table, the contents of the transfer table are read out using the slot ID as a key so as to compare the received transfer information with the contents of the transfer table. Then, it is confirmed that the point numbers and pass codes coincide with each other, and furthermore, it is confirmed that the receiving user ID and receiving date and time columns are left blank. After these confirmations, the UID, which is the identification information on the user J obtained from the mobile phone network 4 when the mobile phone 3 of the user J attempted to have an access, is written in the receiving user ID column of the record identified by the slot ID of the transfer table, and the current time is written in the receiving date and time column.

In S56, the server 1 adds the number of points that have been so transferred to the balance of points of the user J which is stored within the point-related data 22 of the database 2 corresponding to the user ID of the user J. In S57, an allowance transmission receiving process completion page is transmitted from the server 1. In S58, the allowance transmission receiving process completion page is displayed on the mobile phone. Fig. 9C shows an example of a screen of the allowance transmission receiving process completion page that is displayed in S58. The number of points that has been added and the current balance of point of the user are displayed on the screen. This is the end of the point receiving step.

Thus, the user can plead for points through the configurations and operations that have been described heretofore, and the user pleaded with for points can transmit the allowance through the simple operation. Note that in this embodiment, any user, who is the first to execute the receipt, can receive points. Consequently, it is possible that the allowance mail is transferred to a third party, so that the third party can receive points allowed to be transferred by the mail.

While an embodiment has been described heretofore, it is possible tomake the followingmodifications to the invention. While the example is described in the embodiment in which any user is allowed to receive points, it is possible to design the system such that only a specific user can receive points. In this case, a user ID for the specific receiver is registered in the transfer table, and may be checked while the receiving process is being carried out.

While the example is disclosed in the embodiment in which the pleading mail and the allowance mail are sent to the mobile phone of the user who pleads for allowance and the mobile phone of the user who offer the allowance, respectively, and the users transfer from their mobile phones the respective mails to the mobile phones of the user who is willing to transfer the allowance and the mobile phone of the user who is pleading for allowance, respectively, the users may transmit addresses of other users as addresses to which the mails are sent to the server 1 from terminals thereof for designation, so that the server 1 transmits the mails to terminals of the other users. While the example is disclosed in the embodiment in which the application is downloaded for installation, the invention can be executed using only browsers and mailers which are equipped on mobile phones as standard equipment. In this case, processes similar to those of the embodiment can be performed by selecting the URLs described in the mails for access.

It is noted that the foregoing examples have been provided merely for the purpose of explanation and are in no way to be construed as limiting of the present invention. While the present invention has been described with reference to certain embodiments, it is understood that the words which have been used herein are words of description and illustration, rather than words of limitation. Changes may be made, within the purview of the appended claims, as presently stated and as amended, without departing from the scope of spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

## Claims

1. A point management method including:
producing and transmitting a point transfer request mail containing information on the number of points requested to be transferred upon receipt of a request from a terminal of a user;
subtracting a number of points agreed to be transferred are from the balance of points of a user who offers a transfer of the agreed number of points when there is an access from a terminal of the user based on the transfer request mail and preparing a point transfer mail to be transmitted to the terminal of the user who has requested a transfer of points; and
adding the agreed number of points to the balance of points of the user who has requested a transfer of points when there is an access from the terminal of the user based on the point transfer mail.

2. A point management method as set forth in Claim 1, wherein the subtracting further comprises changing the number of points contained in the transfer request mail.

3. A point management method as set forth in Claim 1, wherein the adding further comprises confirming that the agreed number of points have not yet been transferred and changing the status of the points such that the points have been transferred.

4. A point management system comprising:
a transfer request mail producer that produces and transmits a point transfer request mail which contains information on the number of points requested to be transferred upon receipt of a request from a terminal of a user;
a transfer processor that produces and stores transfer information by subtracting the number of points agreed to be transferred from the balance of points of a user who offers a transfer of the agreed number of points when there is an access from a terminal of the user based on the transfer request mail;
a point transfer mail producer that produces and transmits a point transfer mail which contains information on the number of points to be transferred; and
a point transfer adder that adds the number of points agreed to be transferred to the balance of points of the user who has requested a transfer of points when there is an access from the terminal of the user based on the point transfer mail.

5. A point management system as set forth in Claim 4, wherein the transfer processor further comprising a changing unit for changing the number of points contained in the transfer request mail.

6. A point management system as set forth in Claim 4, further comprising a downloader that downloads an application program in the terminal.

7. A computer readable medium storing a computer program for execution by a computer the program comprising:
a transfer request mail producer that produces and transmits a point transfer request mail which contains information on the number of points requested to be transferred upon receipt of a request from a terminal of a user;
a transfer processor that subtracts the number of points agreed to be transferred from the balance of points of a user who offers a transfer of the agreed number of points when there is an access from a terminal of the user based on the transfer request mail, and produces and stores transfer information;
a point transfer mail producer that produces and transmits a point transfer mail which contains information on the number of points to be transferred; and
a point transfer adder that adds the number of points agreed to be transferred to the balance of points of the user who has requested a transfer of points when there is an access from the terminal of the user based on the point transfer mail.

8. A terminal comprising:
a request mail producer that produces a point transfer request mail in cooperation with a server;
an allowance transmission assistant that assists in producing an allowance point transmission mail in cooperation with the server based on a received point transfer request mail; and
a receipt assistant that assists in a point receiving process based on a received allowance transmission mail.
